Europäisches Patentamt

European Patent Office

Office européen des brevets

(19)

(11) Numéro de publication : **0 190 513**
**B1**

(12) **FASCICULE DE BREVET EUROPÉEN**

(45) Date de publication du fascicule du brevet :
09.11.88

(51) Int. Cl.⁴ : **G 01 P 3/488**, G 01 D 5/244

(21) Numéro de dépôt : **85401884.3**

(22) Date de dépôt : **26.09.85**

(54) **Dispositif détecteur de la position angulaire d'un disque ou d'une couronne dentée rotatif.**

(30) Priorité : 03.10.84 FR 8415346

(43) Date de publication de la demande :
13.08.86 Bulletin 86/33

(45) Mention de la délivrance du brevet :
09.11.88 Bulletin 88/45

(84) Etats contractants désignés :
AT DE FR GB IT

(56) Documents cités :
DE-A- 2 923 425
FR-A- 2 479 453.
FR-A- 2 526 953

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Herbault, Patrick Jean-Pierre**
**94, rue Thiers**
**F-92100 Boulogne-Billancourt (FR)**

(74) Mandataire : **Boivin, Claude**
**9, rue Edouard-Charton**
**F-78000 Versailles (FR)**

Jouve, 18, rue St-Denis, 75001 Paris, France

## Description

La présente invention concerne un dispositif détecteur pour déterminer la position angulaire d'un repère de référence d'un disque ou d'une couronne muni de dents et solidaire d'un arbre tournant d'une machine ou d'un moteur, en particulier d'un moteur à combustion de véhicule automobile, qui comprend un capteur magnétique disposé à proximité des dents et dans lequel ces dents présentent une zone singulière. Celle-ci engendre dans le capteur un signal qui se distingue du signal provoqué par le reste de la denture.

La zone singulière peut être constituée par une ou plusieurs dents manquantes (brevets français n° 2 410 826 et 2 446 467). Cette ou ces dents manquantes perturbent aussi le signal provoqué par les dents voisines normales et nuisent à l'équilibrage dynamique du disque ou de la couronne.

Une solution à cet inconvénient a déjà été proposée dans la demande de brevet français n° 2 526 953 dans laquelle un segment métallique est disposé dans la zone où des dents ont été supprimées et déterminé de manière que sa surface extérieure soit en retrait par rapport au contour extérieur de la denture.

Cette disposition diminue les perturbations mais augmente les difficultés de détection précise du passage du signal à zéro à basse vitesse.

La présente invention a pour objet un dispositif détecteur du type ci-dessus, qui remédie à ces inconvénients.

Le détecteur selon l'invention est caractérisé en ce que la zone singulière comprend un usinage en forme de cuvette s'étendant sur une largeur sensiblement égale à celle des deux dents et de trois creux de denture et présentant en son milieu un minimum marqué.

Dans un mode de réalisation avantageux de l'invention, l'usinage est délimité par deux rampes rectilignes formant un V.

Il est avantageux que le point de chacune des rampes le plus éloigné du centre de la roue ou du disque, c'est-à-dire le plus proche du sommet des dents adjacentes, ne se trouve pas à ce sommet mais en soit éloigné d'une distance égale à 15 à 25 % de la hauteur de la dent.

On a décrit ci-après, à titre d'exemple non limitatif, un mode de réalisation du dispositif selon l'invention, avec référence au dessin annexé dans lequel :

La Figure 1 représente une roue dentée d'un dispositif détecteur de type connu ;

Les Figures 2a, 2b, 2c et 2d représentent respectivement une partie de la denture mise à plat, la variation du flux, celle de la tension aux bornes du capteur, et le signal après mise en forme ;

La Figure 3 représente la roue dentée du dispositif selon l'invention ;

La Figure 4 représente à plus grande échelle la singularité de la roue du dispositif de la Figure 3 ;

Les Figures 5a, 5b, 5c et 5d représentent respectivement une partie de la denture de la roue du dispositif de la Figure 3, mise à plat, la variation du flux, celles de la tension aux bornes du capteur, et le signal après mise en forme.

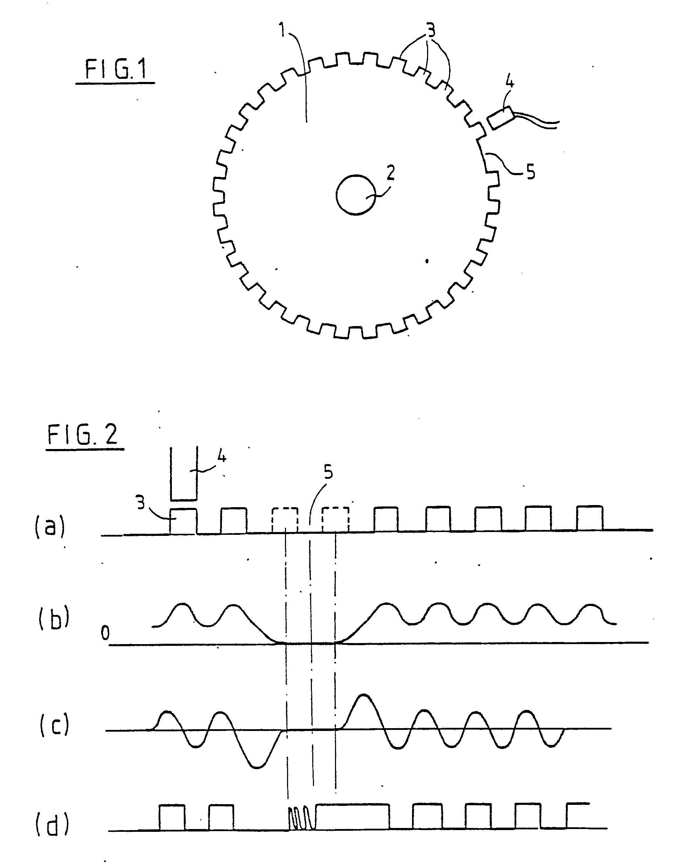

A la Figure 1, on voit une roue 1 qui est fixée sur un arbre 2 et porte à sa périphérie des dents 3. Un capteur magnétique 4 est disposé à proximité des dents. Celles-ci comportent une singularité 5 constituée de manière connue par l'absence de deux dents.

Lors du déplacement des dents 3 devant le capteur 4, le flux magnétique auquel est soumis ce capteur varie comme indiqué à la Figure 2b et le capteur fournit un signal dont l'allure est représentée à la Figure 2c. Ce signal mis en forme a l'allure de la Figure 2d.

On constate qu'au passage de la discontinuité 5 devant le capteur, la courbe de la Figure 2c fait un angle très faible avec la ligne zéro et ne la coupe pas de manière précise. Les tensions maximales du signal de part et d'autre de la discontinuité, ont des amplitudes supérieures à leur valeur normale. Le signal mis en forme peut présenter du « bruit » comme on peut le voir à la Figure 2d en raison d'une part de la réalisation mécanique et d'autre part des perturbations électro-magnétiques.

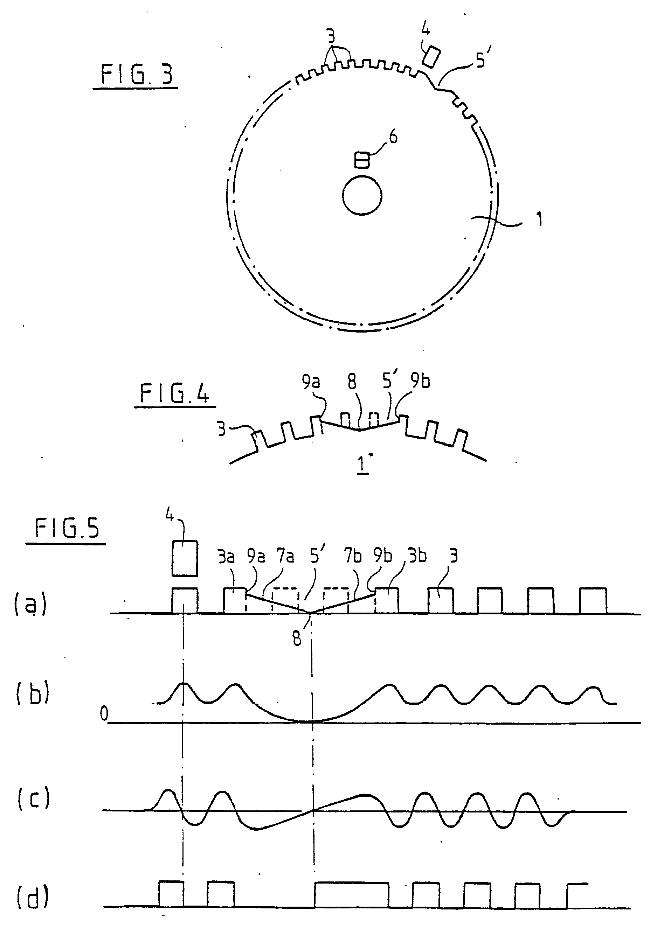

A la Figure 3, on voit un dispositif détecteur selon l'invention dans lequel la roue 1 comporte une singularité 5'. La référence 6 désigne un ergot qui assure le calage de la roue lors du montage mécanique.

Comme on peut le voir plus particulièrement à la Figure 4, la singularité 5' est constituée par un usinage en forme de V s'étendant dans une zone dont la largeur est celle de deux dents et de trois creux de denture. Cet usinage est délimité par deux rampes rectilignes 7a et 7b qui partent obliquement en sens opposé du milieu d'un creux de dent 8 pour rejoindre des points 9a et 9b qui sont situés sur les flancs arrière et avant des deux dents 3a et 3b écartées l'une de l'autre d'une distance égale à la largeur de deux dents et de trois creux de denture. Les points 9a et 9b sont situés à une distance du sommet des dents qui est égale à 15 à 25 % de la hauteur de la dent, par exemple 1 mm pour une dent ayant une hauteur de 5mm.

On voit à la Figure 5c que la courbe représentant la tension aux bornes du capteur coupe franchement la ligne zéro et que le signal au droit des dents voisines 3a et 3b n'est pratiquement pas perturbé grâce aux décrochements 9a et 9b qui entraînent un décalage minimum du flux sur les dents, donc du passage à zéro.

Après mise en forme (Figure 5d), le signal est pratiquement insensible aux bruits.

La singularité de denture a un poids pratiquement équivalent à celui des deux dents manquantes.

La singularité participe donc à l'équilibrage dynamique, qui dans le cas des deux dents manquantes est très perturbé, et dont le rétablissement est délicat et coûteux.

Il va de soi que la forme de la cuvette décrite précédemment, V réalisée par deux rampes rectilignes, peut aussi être remplacée par une forme convexe évoluée mais qui doit présenter en son milieu un minimum marqué, c'est-à-dire donnant un signal facilement repérable.

Cela peut être le cas de formes usinées dont le profil est réalisé suivant des développantes de cercle. On peut encore sophistiquer la courbe en la calculant de façon telle que l'équilibrage dynamique soit parfait.

## Revendications

1. Dispositif détecteur pour déterminer la position angulaire d'un repère de référence d'un disque (1) ou d'une couronne muni de dents (3) et solidaire d'un arbre tournant d'une machine ou d'un moteur, en particulier d'un moteur à combustion de véhicule automobile, qui comprend un capteur magnétique (4) disposé à proximité des dents (3) et dans lequel ces dents présentent une zone singulière, caractérisé en ce que la zone singulière comprend un usinage (5') en forme de cuvette s'étendant sur une largeur sensiblement égale à celle de deux dents et de trois creux de denture et présentant en son milieu un minimum (8) marqué.

2. Dispositif selon la revendication 1, caractérisé en ce que l'usinage (5') est délimité par deux rampes rectilignes (7a et 7b) formant un V.

3. Dispositif selon la revendication 2, caractérisé en ce que le point (9a ou 9b) de chacune des rampes (7a et 7b), qui est le plus éloigné du centre de la roue ou du disque, est éloigné du sommet des dents adjacentes (3a et 3b) d'une distance égale à 15 à 25 % de la hauteur de la dent.

## Claims

1. Detector device for determining the angular position of a reference mark on a disk (1) or a ring provided with teeth (3) and fast with a rotary shaft of a machine or a motor, in particular a motor vehicle combustion engine which includes a magnetic sensor (4) disposed close to the teeth (3) and in which these teeth have a singular zone, characterized in that the singular zone comprises a machined (5') cup shape extending over a width substantially equal to that of two of the teeth and three hollows of the set of teeth and having a marked minimum (8) in the middle.

2. Device according to claim 1, characterized in that the machined portion (5') is defined by two rectilinear ramps (7a and 7b) forming a V.

3. Device according to claim 2, characterized in that the point (9a or 9b) of each of the ramps (7a and 7b), the furthest away from the center of the wheel or disk, is spaced apart from the apex of the adjacent teeth (3a and 3b) by a distance equal to 15 to 25 % of the height of the teeth.

## Patentansprüche

1. Meßgerät zur Bestimmung der Winkelposition einer Referenzmarke an einer kraftschlüssig mit einer drehbaren Welle einer Maschine oder eines Motors, insbesondere des Verbrennungsmotore eines Kraftfahrzeugs, verbundenen, mit Zähnen (3) versehenen Zahnscheibe (1) oder einem Zahnkranz, welches einen in der Nähe der Zähne (3) angeordneten magnetischen Meßfühler (4) besitzt und bei dem diese Zähne eine singuläre Zone aufweisen, dadurch gekennzeichnet, daß die singuläre Zone (5') eine trichterförmige Verformung aufweist, die sich über eine Breite erstreckt, welche im wesentlichen derjenigen von zwei Zähnen und drei Zahnlücken entspricht und die in ihrer Mitte ein ausgeprägtes Minimum (8) besitzt.

2. Meßgerät nach Anspruch 1, dadurch gekennzeichnet, daß die Verformung (5') durch zwei gradlinige, ein V bildende Rampen (7a und 7b) abgegrenzt ist.

3. Meßgerät nach Anspruch 2, dadurch gekennzeichnet, daß der Punkt (9a oder 9b) jeder der Rampen (7a und 7b), welcher am weitesten vom Mittelpunkt des Rades oder der Scheibe entfernt ist, vom Scheitel der angrenzenden Zähne (3a und 3b) einen Abstand besitzt, der 15 bis 25 % der Zahnhöhe entspricht.

FIG.1

FIG. 2

(a)

(b)

0

(c)

(d)

FIG. 3

3    4    5'

6

1

FIG.4

9a    8    5'    9b

3

1'

FIG.5

4

3a 9a 7a 5' 7b 9b 3b 3

(a)

8

(b)

0

(c)

(d)